Europäisches Patentamt

European Patent Office

Office européen des brevets

(19)

(11) Veröffentlichungsnummer: **0 071 151**
**B1**

(12) **EUROPÄISCHE PATENTSCHRIFT**

(45) Veröffentlichungstag der Patentschrift:
20.11.86

(21) Anmeldenummer: 82106517.4

(22) Anmeldetag: 19.07.82

(51) Int. Cl.⁴: **G 01 N 3/32,** G 01 M 7/00

(54) Verfahren und Vorrichtung zur zerstörungsfreien Messung des Ansprechdruckes von Umkehrberstscheiben.

(30) Priorität: 29.07.81 DE 3129998

(43) Veröffentlichungstag der Anmeldung:
09.02.83 Patentblatt 83/6

(45) Bekanntmachung des Hinweises auf die Patenterteilung:
20.11.86 Patentblatt 86/47

(84) Benannte Vertragsstaaten:
AT BE CH DE FR GB IT LI LU NL SE

(56) Entgegenhaltungen:
FR - A - 2 281 531

DER ELEKTRONIKER, Band 15, Nr. 5, Mai 1976, Seiten EL20-EL24, Aarau, CH. O. MÜLLER: "High frequency spectrum analyser for measurements in ultrasonic resonance technique"
REFRACTORIES, Band 17, Nr. 1,2, Januar/Februar 1976, Seiten 82-83, New York, USA N.K. SENYAVIN et al.: "Apparatus for determining the resonance frequency of nonmetallic specimens in investigations of their elastic properties"

(73) Patentinhaber: INTERATOM Gesellschaft mit beschränkter Haftung, Friedrich-Ebert-Strasse, D-5060 Bergisch Gladbach 1 (DE)

(72) Erfinder: Vagt, Peter, Amselweg 3, D-5064 Rösrath (DE)

(74) Vertreter: Mehl, Ernst, Dipl.-Ing. et al, Postfach 22 01 76, D-8000 München 22 (DE)

### Beschreibung

Die vorliegende Erfindung betrifft ein Verfahren und eine Vorrichtung zur zerstörungsfreien Bestimmung des Ansprechdruckes von Umkehrberstscheiben. Die Verwendung von Umkehrberstscheiben als Sicherheitsventile, welche bei Überschreiten eines bestimmten Druckes schlagartig einen grossen Querschnitt freigeben, ist weit verbreitet. Von besonderem Interesse ist dabei die möglichst genaue Kenntnis des Ansprechdruckes, bei dem die Zerstörung eintritt. Ein Verfahren zur Bestimmung des Ansprechdruckes, insbesondere auch für eingebaute Umkehrberstscheiben ist nicht bekannt. Die bisherige Methode zur Bestimmung des Ansprechdruckes besteht darin, eine bestimmte Anzahl von Umkehrberstscheiben möglichst exakt gleich zu fertigen und einen bestimmten Anteil davon dann zerstörend zu prüfen. Aus den Ansprechdrücken der zerstörten Umkehrberstscheiben wird dann auf den Rest der Serie geschlossen. Dabei ist entweder die Zahl der zerstörten Scheiben sehr hoch oder die Toleranz des angegebenen Ansprechdruckes sehr gross. Die Aussagen sind überdies nur statistischer Natur und können individuelle Unterschiede nicht berücksichtigen. Das bisherige Verfahren ist also einerseits kostenaufwendig und andererseits im Ergebnis für einzelne Umkehrberstscheiben unbefriedigend.

Aufgabe der vorliegenden Erfindung ist daher ein Verfahren und eine Vorrichtung zur zerstörungsfreien Bestimmung des Ansprechdruckes von Umkehrberstscheiben. Dabei soll für jede individuelle Berstscheibe eine Ermittlung des Ansprechdruckes mit sehr geringer Toleranz möglich sein, insbesondere auch bei schon an ihrem endgültigen Bestimmungsort eingebauten Berstscheiben. Damit sollen auch Wiederholungsprüfungen, die Rückschlüsse auf Materialermüdung und ähnliches gestatten, ermöglicht werden. In vielen Fällen wird es möglich sein, im Zusammenhang mit dieser Methode der zerstörungsfreien Prüfung, den Ansprechdruck wunschgemäss zu trimmen, insbesondere durch Veränderungen an der Einspannung oder gezielte Bearbeitung zu erniedrigen.

Zur Lösung dieser Aufgaben wird ein Verfahren gemäss dem Anspruch 1 und werden Vorrichtungen gemäss den Ansprüchen 9 und 15 vorgeschlagen. Zum Verständnis des Verfahrens sei hier kurz die zugehörige Theorie dargelegt:

In dem Verfahren wird das instabile Einbeulen beim Ansprechen der Berstscheibe als Sonderfall einer freien Schwingung der Berstscheibenkuppe angesehen. Eine Schwingung ist dadurch gekennzeichnet, dass einer Auslenkung A aus der Ruhelage eine Rückstellkraft K entgegenwirkt. Die Frequenz f richtet sich vereinfacht nach dem Zusammenhang

$$f^2 = \text{konst} \frac{K}{A}$$

Die Rückstellkraft K enthält im allgemeinen Fall einen Anteil aus elastischer Materialverformung und einen Anteil aus äusserer Belastung, welcher positiv und negativ sein kann. Ein positiver Beitrag der äusseren Last bedeutet, dass die Last der Auslenkung entgegenwirkt, was meistens mit Zugspannung verbunden ist. Negativer Beitrag zur Rückstellkraft bedeutet, dass die äussere Last die Auslenkung fördert, was meistens mit Druckspannung verbunden ist. Ein positiver Beitrag der äusseren Last zur Rückstellkraft erhöht die Frequenz der freien Schwingung, ein negativer Beitrag erniedrigt die Frequenz. Im Grenzfall erniedrigt der negative Beitrag die Frequenz bis zu dem Punkt, wo keine Rückstellkraft mehr vorhanden ist. In diesem Grenzfall ist die Schwingungsfrequenz Null. Für diesen Fall muss das System als instabil eingestuft werden, da keine Rückstellkraft vorhanden ist: Es entsteht ein Knick oder eine Beule, die zum Bruch führt.

Die Tatsache, dass die Frequenz der freien Schwingung für diesen Grenzfall des instabilen Versagens bekannt ist (f = 0), ermöglicht das vorgeschlagene Verfahren, nämlich aus dem Verlauf der Frequenz in Abhängigkeit vom Druck im unkritischen Belastungsbereich auf die Belastung beim Versagen zu schliessen.

Man kann zeigen, dass die Rückstellkraft und damit das Quadrat der Schwingungsfrequenz linear zur äusseren Belastung verläuft, jedenfalls bei kleinen Verformungen und Spannungen unterhalb der Proportionalitätsgrenze. Diese Bedingungen sind bei den Umkehrberstscheiben ausreichend erfüllt. Falls das in Sonderfällen nicht zutreffen sollte, sind korrigierende Massnahmen bei der Ermittlung des Ansprechdruckes vorzusehen.

Erschwerend wirkt in der Anwendung lediglich die Tatsache, dass die Berstscheibenkuppe mehrere Schwingungsformen hat, die mit verschiedener Frequenz schwingen und deren Frequenz sich verschieden stark mit dem Innendruck ändert. Eine Linearität der Abhängigkeit besteht allerdings immer. Massgebend für den Ansprechdruck ist nun die Schwingungsform, die der Versagensform entspricht. Das ist diejenige, die bei dem kleinsten Innendruck die Frequenz Null erreicht. Bei einer unbekannten Berstscheibe, bei der die Schwingungsform für den Versagensfall nicht bekannt ist, muss man daher die Abhängigkeit der Frequenz vom Innendruck für verschiedene Schwingungsformen ermitteln und jeweils bis zum Nullpunkt linear extrapolieren. Das bedeutet für die Praxis aber nur eine Untersuchung der vier niedrigsten Schwingungsformen, da höhere als Versagensform nicht in Betracht kommen. Häufig ist es die zweite Schwingungsform, die zum Versagen führt.

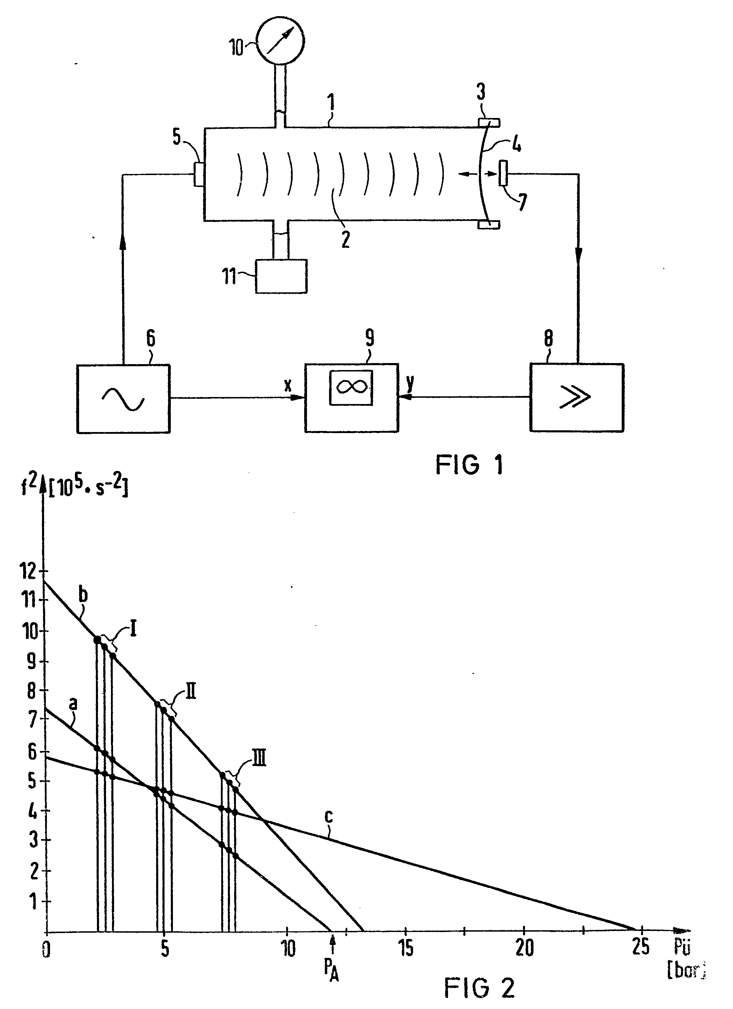

Bei der Durchführung des Verfahrens muss daher darauf geachtet werden, dass die Zuordnung der Messpunkte zur jeweiligen Schwingungsform richtig erfolgt, da sonst Fehlinterpretationen auftreten. Ein geeignetes Vorgehen bei der Messung wird im Zusammenhang mit Fig. 2 noch eingehend beschrieben. Wichtig ist zunächst einmal, dass zu jedem Messdruck mehrere Resonanzen der Umkehrberstscheiben-Schwingung entsprechend den verschiedenen Schwingungsformen, festzustellen sind. Wie schon gesagt, genügt es dabei, die untersten vier Resonanzen aufzufinden. Bei Messungen unter wenigstens drei verschiedenen, genügend weit auseinanderliegenden Drükken sind die Ergebnisse schon eindeutig interpretierbar, wobei natürlich die Messgenauigkeit durch geeignete Wahl der Anzahl der Messpunkte und der Messdrücke gesteigert werden kann.

Besondere Bedeutung bekommt das Verfahren, wie im Anspruch 2 gesagt, dadurch, dass auch endgültig an ihrem Bestimmungsort eingebaute Umkehrberstscheiben getestet werden können. Dadurch ist einerseits ein Erkennen von Einbau-Einflüssen möglich, andererseits sind Wiederholungsprüfungen und gegebenenfalls Massnahmen zum Trimmen des Ansprechdrucks möglich.

Im Anspruch 3 wird eine Möglichkeit beschrieben, das Verfahren durchzuführen. Dazu wird die Umkehrberstscheibe in eingebautem Zustand bei verschiedenen Messdrücken durch Anschlagen oder einen mit einem Rauschen beaufschlagten Schallgeber zum Schwingen angeregt. Mit einem Mikrophon oder einem entsprechenden Schwingungsaufnehmer wird die Schwingung registriert und das Frequenzspektrum der Schwingung wird analysiert. Dabei ergeben sich die Resonanzfrequenzen der verschiedenen Schwingungsformen.

Ein etwas genaueres Verfahren wird im Anspruch 4 dargelegt. In diesem Falle werden die Schwingungen der Umkehrberstscheibe durch einen Schallgeber erzeugt, welcher von einem Frequenzgenerator angesteuert wird. Ein Schwingungsaufnehmer registriert dann die Amplitude der Schwingung der Umkehrberstscheibe, während die Frequenz am Frequenzgenerator kontinuierlich verändert wird. Resonanzfrequenzen werden dadurch erkannt, dass die Amplitude der Schwingung ein Maximum annimmt. Dieses Verfahren, insbesondere in Verbindung mit den folgenden Ansprüchen, zeichnet sich durch grosse Genauigkeit aus.

Im Anspruch 5 wird vorgeschlagen, den Schall über die Struktur der Apparatur auf die Umkehrberstscheibe zu übertragen. Dies hat den Vorteil, dass der Schallgeber nicht mit dem Fluid gekoppelt werden muss, was bei bereits bestehenden Aufbauten unter Umständen zu Schwierigkeiten führen würde.

Andererseits kann es aber auch von Vorteil sein, den Schall über das Fluid auf die Umkehrberstscheibe zu übertragen, insbesondere dann, wenn die Struktur zur Schallübertragung ungeeignet ist. In diesem Falle wird der Schallgeber mit der Flüssigkeit gekoppelt und der Schall überträgt sich dann auf die Umkehrberstscheibe.

Um den Einfluss der Messgeräte auf die Schwingung der Umkehrberstscheibe möglichst gering zu halten, wird im siebten Anspruch vorgeschlagen, die Schwingung berührungslos zu messen. In Frage kommen für diese Methode z.B. induktive oder kapazitive Messmethoden. Da Umkehrberstscheiben sehr empfindlich sind und Fremdeinflüsse bei der Messung ausgeschlossen werden sollen, ist dieses Verfahren jeder Befestigung von Messgeräten vorzuziehen.

Im Anspruch 8 wird eine Möglichkeit gezeigt, wie sich die Resonanzfrequenzen ohne grossen apparativen Aufwand identifizieren lassen. Dazu wird der Elektronenstrahl eines Oszilloskopes in der einen Koordinate durch den Ausgang des Frequenzgenerators angesteuert und in der zweiten Koordinate durch die Amplitude der Schwingung der Umkehrberstscheibe. Wird nun die Frequenz des Schallgebers kontinuierlich verändert, so entstehen auf dem Oszilloskop sogenannte Lissajous'sche Figuren, die eine Identifizierung der Schwingungsformen und der Resonanzfrequenzen unmittelbar ermöglichen. Die bei bestimmtem Messdruck aufgefundenen Resonanzfrequenzen können dann in ein Diagramm (siehe Erläuterung zu Fig. 2) eingetragen werden, wodurch ein graphisches Auffinden des Ansprechdruckes erleichtert wird.

Im Anspruch 9 wird der prinzipielle Aufbau einer Vorrichtung zur Durchführung des Verfahrens beschrieben. Eine Umkehrberstscheibe wird mit Hilfe einer Halterung in eine Struktur so eingebaut, dass sie ein im Inneren der Struktur befindliches Fluid von der Umgebung abtrennt. Das Fluid kann mit Hilfe einer Pumpe oder einer ähnlichen Einrichtung unter Druck gesetzt werden, der auch mittels eines Messgerätes abgelesen werden kann. Mit Hilfe geeigneter Mittel kann die Umkehrberstscheibe in Schwingung versetzt werden, wobei diese Schwingungen gemessen und die Resonanzfrequenzen mit geeigneten Mitteln festgestellt werden. Bei einer bereits eingebauten Berstscheibe sind üblicherweise Struktur, Halterung und Druckmessgerät bereits vorhanden, so dass nur noch die übrigen Mittel angebracht werden müssen.

Im Anspruch 10 wird dazu vorgeschlagen, den Schallgeber auf die Struktur aufzusetzen, während der Anspruch 11 vorsieht, den Schallgeber akustisch mit dem Fluid zu koppeln. Beide Möglichkeiten sind je nach den apparativen Gegebenheiten geeignet, die Berstscheibe in Schwingung zu versetzen. Der Anspruch 12 beschreibt die Möglichkeit, einen berührungslosen Sensor als Schwingungsmesser einzusetzen, während für den Fall, dass die Aussenseite der Umkehrberstscheibe nicht zugänglich ist, der Schwingungsaufnehmer auch gemäss Anspruch 13 an der Struktur in der Nähe der Umkehrberstscheibe befestigt werden kann. In vielen Fällen trennt eine Umkehrberstscheibe lediglich zwei Abschnitte eines Rohres, so dass kein Sensor in der Nähe der Berstscheibenkuppe angebracht werden kann. Für diesen Fall ist eine Schwingungsmessung über die Struktur vorgesehen, wobei dann sinnvollerweise die Erregung der Schwingung über das Fluid erfolgen sollte.

Im Anspruch 14 wird eine Vorrichtung zur Durchführung des Verfahrens nach Anspruch 8 beschrieben, wobei dies die gängige Anordnung zur Messung von Resonanzfrequenzen mit Hilfe von Lissajous'schen Figuren ist.

Der Anspruch 15 sieht vor, Schallgeber, Schallaufnehmer und Zusatzgeräte als eine transportable Einheit zu montieren, wobei Schallgeber und Schwingungsmesser so gestaltet sein sollen, dass sie auf verschiedene Strukturen aufsetzbar sind. Mit Hilfe einer solchen Vorrichtung können in beliebige Strukturen bereits eingebaute Berstscheiben auf ihren Ansprechdruck hin untersucht werden. Es werden lediglich Schallgeber und Schallaufnehmer an geeigneter Stelle montiert und die Untersuchung dann wie beschrieben durchgeführt.

Eine weitere Erläuterung der Erfindung und ein schematisches Ausführungsbeispiel werden durch die Zeichnung gegeben. Die Figur 1 zeigt schematisch eine Vorrichtung zur zerstörungsfreien Bestimmung des Ansprechdrucks von Umkehrberstscheiben, und Figur 2 zeigt ein Diagramm wie es bei der Aufzeichnung der Messwerte und graphischen Extrapolation entsteht.

In Fig. 1 ist mit 1 eine Struktur bezeichnet, welche im einfachsten Fall ein Rohr von geeignetem Durchmesser ist. Im Inneren dieser Struktur befindet sich ein Fluid 2. Mit Hilfe einer Halterung 3 wird eine Umkehrberstscheibe 4 befestigt. An einer geeigneten Stelle der Struktur ist ein Schallerzeuger 5 befestigt, der entweder akustisch mit dem Fluid gekoppelt ist oder seinen Schall über die Struktur auf die Berstscheibe überträgt. Ein Frequenzgenerator 6 steuert den Schallerzeuger an, während ein, vorzugsweise berührungsloser, Sensor 7 nahe vor der Umkehrberstscheibe 4 montiert ist. Es kann sich dabei um einen induktiven oder kapazitiven Sensor handeln. Ein Verstärker 8 verstärkt die aufgenommenen Signale und leitet sie an den y-Eingang eines Oszilloskops 9 weiter. Wird gleichzeitig der x-Eingang von dem Frequenzgeneratorausgang angesteuert, so entstehen auf dem Oszilloskop Lissajous'sche Figuren, welche ein Identifizieren von Resonanzen ermöglichen. Da die Messung bei verschiedenen Fluiddrücken durchgeführt werden soll, ist ein Druckmesser 10 vorgesehen und eine Vorrichtung 11, beispielsweise eine Pumpe zur Einstellung des gewünschten Druckes.

Üblicherweise besitzt eine Apparatur, bei der Umkehrberstscheiben verwendet werden, schon Möglichkeiten zum Einstellen und Ablesen des Drucks, so dass an ihr nur noch ein Schallgeber und ein Schwingungssensor angebracht werden müssen. Auf diese Weise lassen sich schon an ihrem Bestimmungsort eingebaute Berstscheiben untersuchen.

In Fig. 2 ist ein Diagramm gezeigt, wie es bei der graphischen Auswertung von nach dem vorgeschlagenen Verfahren durchgeführten Messungen entsteht. Dabei ist auf der x-Achse der Druck aufgetragen und auf der y-Achse das Quadrat der Frequenz. Auf diese Weise stellt sich der gesuchte funktionale Zusammenhang als Gerade dar. Die Geraden a, b und c stellen den Frequenzverlauf in Abhängigkeit vom Systemdruck für die untersten drei Schwingungsformen dar. Man sieht, dass sich diese Geraden im Messbereich schneiden können, so dass es unter Umständen nicht ganz einfach ist, die Messpunkte richtig zuzuordnen. Bei hoher Messgenauigkeit müssten zwar prinzipiell drei Messpunkte bei verschiedenen Drücken genügen, es kann aber zu Schwierigkeiten kommen, wenn einer der Messpunkte gerade in der Nähe eines Schnittpunktes liegt. Deshalb wird, wie in der Fig. 2 angedeutet, vorgeschlagen, wenigstens drei Messgruppen I, II und III aufzuzeichnen, um eine sichere Interpretation der Messpunkte und eine Zuordnung zu den entsprechenden Schwingungsformen zu erreichen. Auf diese Weise entstehen genug Messpunkte für eine genaue Festlegung jeder Geraden, und diese können auch mit hinreichender Genauigkeit in das Gebiet des Ansprechdruckes extrapoliert werden. Diejenige Gerade, welche beim niedrigsten Druck die x-Achse schneidet, entspricht der Schwingungsform des Versagens. Der Schnittpunkt mit der x-Achse gibt den genauen Ansprechdruck an. In diesem Diagramm würden die Geraden für höhere Schwingungsformen alle höher verlaufen, weshalb sie keine Rolle bei der Untersuchung des Ansprechdruckes mehr spielen. Wegen der grossen Einfachheit und Übersichtlichkeit wurde hier nur ein graphisches Auswerteverfahren beschrieben. Es ist natürlich jederzeit auch eine rechnerische, gegebenenfalls rechnergestützte, Auswertung möglich. In diesem Falle würde man die Geraden mit einem der bekannten Ausgleichsverfahren aus den Messpunkten berechnen und den Schnittpunkt mit der x-Achse festlegen.

Das hier dargelegte Verfahren bietet daher prinzipiell die Möglichkeit, für eine individuelle Berstscheibe zerstörungsfrei den Ansprechdruck mit fast beliebig kleiner Toleranz zu messen. Durch Erhöhung der Zahl der Messpunkte und Erweiterung des Messbereiches kann die Genauigkeit jedenfalls weit über das hinausgehen, was bisher durch statistische Verfahren und zerstörende Prüfung möglich war.

## Patentansprüche

1. Verfahren zur zerstörungsfreien Bestimmung des Ansprechdruckes von Umkehrberstscheiben, gekennzeichnet durch folgende Merkmale:
   a) Die Resonanzfrequenzen wenigstens der unteren Schwingungsformen der Umkehrberstscheiben werden bei verschiedenen unterhalb des Ansprechdruckes liegenden Messdrücken gemessen.
   b) Aus den Resonanzfrequenzen jeder Schwingungsform in Abhängigkeit vom Messdruck wird der jeweilige Druck extrapoliert, bei dem die Resonanzfrequenz dieser Schwingungsform Null wird.
   c) Der niedrigste Druck, bei dem eine der Schwingungsformen die Resonanzfrequenz Null hätte, ist der gesuchte Ansprechdruck der Umkehrberstscheibe.

2. Verfahren nach Anspruch 1, gekennzeichnet durch folgendes Merkmal:
   Das Verfahren wird bei endgültig eingebauter Umkehrberstscheibe durchgeführt.

3. Verfahren nach Anspruch 1 oder 2, gekennzeichnet durch folgende Merkmale:

a) Die Schwingung der Umkehrberstscheibe wird durch Anschlagen oder Rauschen eines Schallgebers angeregt.

b) Das Frequenzspektrum der Schwingung wird analysiert.

4. Verfahren nach Anspruch 1 oder 2, gekennzeichnet durch folgende Merkmale:

a) Die Schwingungen der Umkehrberstscheibe (4) werden durch einen Schallgeber (5) erzeugt.

b) Ein Frequenzgenerator (6) mit kontinuierlich veränderbarer Frequenz steuert den Schallgeber (5) an.

c) Ein Schwingungsaufnehmer (7) registriert die Amplitude der Schwingung der Umkehrberstscheibe (4).

5. Verfahren nach Anspruch 4, gekennzeichnet durch folgendes Merkmal:

Der Schall wird über die Struktur (1) der Apparatur auf die Umkehrberstscheibe (4) übertragen.

6. Verfahren nach Anspruch 4, gekennzeichnet durch folgendes Merkmal:

Der Schall wird durch das Fluid (2) auf die Umkehrberstscheibe (4) übertragen.

7. Verfahren nach Anspruch 4, 5 oder 6, gekennzeichnet durch folgendes Merkmal:

Die Schwingung der Umkehrberstscheibe (4) wird berührungslos gemessen.

8. Verfahren nach Anspruch 4, 5, 6 oder 7, gekennzeichnet durch folgende Merkmale:

a) Die Schwingung des Schallgebers (5) bestimmt die Ablenkung des Elektronenstrahls eines Oszilloskopes (9) in der einen Koordinate.

b) Die Schwingung der Umkehrberstscheibe (4) bestimmt die Ablenkung des Elektronenstrahls in der anderen Koordinate.

c) Die Frequenz des Schallgebers (5) wird kontinuierlich verändert.

d) Die Indentifizierung der Schwingungsformen und der Resonanzfrequenzen erfolgt anhand der so entstehenden Lissajous'schen Figuren.

9. Vorrichtung zur Durchführung des Verfahrens zur zerstörungsfreien Bestimmung des Ansprechdruckes von Umkehrberstscheiben nach einem der vorhergehenden Ansprüche, gekennzeichnet durch folgende Merkmale:

a) Es ist eine Struktur (1) vorhanden, in die die Umkehrberstscheibe (4) mit einer Halterung (3) eingespannt ist.

b) Im Inneren der Struktur befindet sich ein Fluid (2), dessen Druck veränderbar ist.

c) Es ist ein Druckmessgerät (10) vorhanden zur Messung des Fluid-Druckes.

d) Es sind Mittel (5, 6) vorhanden zur Anregung einer Schwingung der Umkehrberstscheibe (4).

e) Es sind Mittel (7, 8) vorhanden zur Messung von Schwingungen der Umkehrberstscheibe (4).

f) Es sind Mittel (9) vorhanden zur Bestimmung von Resonanzfrequenzen der Schwingungen der Umkehrberstscheibe (4).

10. Vorrichtung nach Anspruch 9, gekennzeichnet durch folgendes Merkmal:

Ein Schallgeber (5) ist auf die Struktur aufgesetzt.

11. Vorrichtung nach Anspruch 9, gekennzeichnet durch folgendes Merkmal:

Ein Schallgeber (5) ist akustisch mit dem Fluid gekoppelt.

12. Vorrichtung nach Anspruch 9, 10 oder 11, gekennzeichnet durch folgendes Merkmal:

Ein Schwingungsmesser ist ein berührungsloser Sensor.

13. Vorrichtung nach Anspruch 9, 10 oder 11, gekennzeichnet durch folgendes Merkmal:

Ein Schwingungsaufnehmer zur Messung der Schwingungen der Umkehrberstscheibe ist an der Struktur in der Nähe der Umkehrberstscheibe befestigt.

14. Vorrichtung nach einem der Ansprüche 9 bis 13, gekennzeichnet durch folgende Merkmale:

a) Das Mittel zur Bestimmung der Resonanzfrequenzen ist ein Oszilloskop (9).

b) Der Ausgang eines Frequenzgenerators (6) ist mit dem x-Eingang des Oszilloskops (9) verbunden.

c) Ein oder der Schwingungsmesser ist über einen Verstärker (8) mit dem y-Eingang des Oszilloskops (9) verbunden.

15. Vorrichtung zur Durchführung des Verfahrens zur zerstörungsfreien Bestimmung des Ansprechdruckes von Umkehrberstscheiben nach Anspruch 2, gekennzeichnet durch folgende Merkmale:

a) ein Schallgeber (5) und ein Schallaufnehmer (7) und deren Zusatzgeräte wie Frequenzgenerator (6), Verstärker (8) sowie Oszilloskop (9) sind eine transportable Einheit.

b) Schallgeber (5) und Schallaufnehmer (7) sind auf verschiedene Strukturen (1) aufsetzbar.

**Claims**

1. Process for the non-destructive determination of the response pressure of reversing safety discs, characterised by the following features:

a) The resonance frequencies of at least the lower oscillation forms of the reversing safety discs are measured with different measuring pressures lying below the response pressure.

b) From the resonance frequencies of each oscillation form in dependence on the measuring pressure the respective pressure at which the resonance frequency of this oscillation form is zero is extrapolated.

c) The lowest pressure at which one of the oscillation forms would have the resonance frequency zero is the desired response pressure of the reversing safety disc.

2. Process according to claim 1, characterised by the following feature:

The process is carried out with the reversing safety disc finally installed.

3. Process according to claim 1 or 2, characterised by the following features:

a) The oscillation of the reversing safety disc is excited by striking or background noise of a sound generator.

b) The frequency spectrum of the oscillation is analysed.

4. Process according to claim 1 or 2, characterised by the following features:

a) The oscillations of the reversing safety disc (4) are produced by a sound generator (5).

b) A frequency generator (6) with continuously changeable frequency controls the sound generator (5).

c) An oscillation receiver (7) registers the amplitude of the oscillation of the reversing safety disc (4).

5. Process according to claim 4, characterised by the following feature:

The sound is transmitted via the structure (1) of the apparatus onto the reversing safety disc (4).

6. Process according to claim 4, characterised by the following feature:

The sound is transmitted by the fluid (2) onto the reversing safety disc (4).

7. Process according to claim 4, 5 or 6, characterised by the following feature:

The oscillation of the reversing safety disc (4) is measured without contact.

8. Process according to claim 4, 5, 6 or 7, characterised by the following features:

a) The oscillation of the sound generator (5) determines the deviation of the electron beam of an oscilloscope (9) in one co-ordinate.

b) The oscillation of the reversing safety disc (4) determines the deviation of the electron beam in the other co-ordinate.

c) The frequency of the sound generator (5) is continuously changed.

d) The identification of the oscillation forms and the resonance frequencies is effected by means of the resultant Lissajous figures.

9. Device for carrying out the process for the non-destructive determination of the response pressure of reversing safety discs according to one of the preceding claims, characterised by the following features:

a) There is a structure (1) into which the reversing safety disc (4) is fixed, with a mounting support (3).

b) Inside the structure there is a fluid (2), whose pressure can be changed.

c) There is a pressure measuring device (10) for measuring the fluid pressure.

d) There are means (5, 6) for the excitation of an oscillation of the reversing safety disc (4).

e) There are means (7, 8) for measuring oscillations of the reversing safety disc (4).

f) There are means (9) for determining resonance frequencies of the oscillations of the reversing safety disc (4).

10. Device according to claim 9, characterised by the following feature:

A sound generator (5) is put onto the structure.

11. Device according to claim 9, characterised by the following feature:

A sound generator (5) is acoustically coupled to the fluid.

12. Device according to claim 9, 10 or 11, characterised by the following feature:

An oscillograph is a contact-less sensor.

13. Device according to claim 9, 10 or 11, characterised by the following feature:

An oscillation receiver for measuring the oscillations of the reversing safety disc is secured on the structure near the reversing safety disc.

14. Device according to one of claims 9 to 13, characterised by the following features:

a) The means for determining the resonance frequencies is an oscilloscope (9).

b) The output of a frequency generator (6) is connected to the x-input of the oscilloscope (9).

c) An, or the, oscillograph is connected to the y-input of the oscilloscope (9) via an amplifier (8).

15. Device for carrying out the process for the non-destructive determination of the response pressure of reversing safety discs according to claim 2, characterised by the following features:

a) a sound generator (5) and a sound receiver (7) and their additional devices like frequency generator (6), amplifier (8) and oscilloscope (9) are a portable unit.

b) the sound generator (5) and sound receiver (7) can be put on different structures (1).

## Revendications

1. Procédé de détermination non destructive de la pression de réponse de disques de rupture à déformation inverse, remarquable par les caractéristiques suivantes:

a) on mesure les fréquences de résonance au moins des modes inférieurs de vibration des disques de rupture à déformation inverse pour différentes pressions de mesure inférieures à la pression de réponse,

b) à partir des fréquences de résonance de chaque mode de vibration, on extrapole, en fonction de la pression de mesure, la pression respective pour laquelle la fréquence de résonance de mode de vibration s'annule,

c) la pression la plus faible, pour laquelle l'un des modes de vibration posséderait la fréquence de résonance nulle, est la pression de réponse recherchée du disque de rupture à déformation inverse.

2. Procédé suivant la revendication 1, remarquable par la caractéristique suivante:

ce procédé est mis en oeuvre dans le cas d'un disque de rupture à déformation inverse monté de façon définitive.

3. Procédé suivant la revendication 1 ou 2, remarquable par les caractéristiques suivantes:

a) on déclenche la vibration de rupture à déformation inverse en le frappant ou en utilisant le bruit d'un générateur acoustique;

b) on analyse le spectre des fréquences de la vibration,

4. Procédé suivant la revendication 1 ou 2, remarquable par les caractéristiques suivantes:

a) les vibrations du disque de rupture à déformation inverse (4) sont produites par un générateur acoustique;

b) un générateur de fréquences (6) fournissant une fréquence continûment variable commande le générateur acoustique (5);

c) un capteur de vibrations (7) enregistre l'amplitude de la vibration du disque de rupture à déformation inverse (4).

5. Procédé selon la revendication 4, remarquable par les caractéristiques suivantes:

le son est transmis par l'intermédiaire de la structure (1) de l'appareillage au disque de rupture à déformation inverse (4).

6. Procédé selon la revendication 4, remarquable par la caractéristique suivante:

le son est transmis par l'intermédiaire du fluide (2) au disque de rupture à déformation inverse (4).

7. Procédé suivant la revendication 4, 5 ou 6, remarquable par la caractéristique suivante:

on mesure la vibration du disque de rupture à déformation inverse (4), sans contact.

8. Procédé suivant la revendication 4, 5, 6 ou 7, remarquable par les caractéristiques suivantes:

a) la vibration du générateur acoustique (5) détermine la déviation du faisceau d'électrons d'un oscilloscope (9) suivant l'une des coordonnées.

b) la vibration du disque de rupture à déformation inverse (4) détermine la déviation du faisceau d'électrons suivant l'autre coordonnée;

c) on modifie de façon continue la fréquence du générateur acoustique (5);

d) l'identification des modes de vibration et des fréquences de résonance s'effectue en fonction des figures de Lissajous, qui sont de ce fait produites.

9. Dispositif pour la mise en oeuvre du procédé pour la détermination non destructive de la pression de réponse de disques de rupture à déformation inverse suivant l'une des revendications précédentes, remarquable par les caractéristiques suivantes:

a) il est prévu une structure (1) dans laquelle le disque de rupture à déformation inverse (4) est serré dans un support (3);

b) un fluide (2), dont la pression est variable, est présent à l'intérieur de la structure;

c) il est prévu un manomètre (10) mesurant la pression du fluide;

d) il est prévu des moyens (5, 6) servant à déclencher une vibration du disque de rupture à déformation inverse (4);

e) il est prévu des moyens (7, 8) servant à mesurer les vibrations du disque de rupture à déformation inverse (4);

f) il est prévu des moyens (9) servant à déterminer les fréquences de résonance des vibrations du disque de rupture à déformation inverse (4).

10. Dispositif suivant la revendication 9, remarquable par la caractéristique suivante:

un générateur acoustique (5) est monté sur la structure.

11. Dispositif suivant la revendication 9, remarquable par la caractéristique suivante:

un générateur acoustique (5) est accouplé acoustiquement au fluide.

12. Dispositif suivant la revendication 9, 10 ou 11, remarquable par la caractéristique suivante:

un appareil de mesure de vibrations est un capteur sans contact.

13. Dispositif suivant la revendication 9, 10 ou 11, remarquable par la caractéristique suivante:

un capteur de vibrations servant à mesurer les vibrations du disque de rupture à déformation inverse est fixé à la structure, au voisinage du disque.

14. Dispositif suivant l'une des revendications 9 à 13, remarquable par les caractéristiques suivantes:

a) les moyens pour déterminer les fréquences de résonance sont constitués par un oscilloscope (9);

b) la sortie d'un générateur de fréquences (6) est reliée à l'entrée x de l'oscilloscope (9);

c) un ou le dispositif de mesure de vibrations est relié par l'intermédiaire d'un amplificateur (8) à l'entrée y de l'oscilloscope (9).

15. Dispositif pour la mise en oeuvre du procédé de détermination non destructive de la pression de réponse de disques de rupture à déformation inverse suivant la revendication 2, remarquable par les caractéristiques suivantes:

a) un générateur acoustique (5) et un récepteur acoustique (7) et leurs appareils auxiliaires comme par exemple un générateur de fréquences (6), un amplificateur (8) ainsi qu'un oscilloscope (9), forment une unité transportable;

b) le générateur acoustique (5) et le récepteur acoustique (7) peuvent être montés sur des structures (1) différentes.

FIG 1

FIG 2